# EUROPÄISCHE PATENTSCHRIFT

(11) **EP 3 985 833 B1**
(45) Veröffentlichungstag und Bekanntmachung des Hinweises auf die Patenterteilung: **27.08.2025**
(21) Anmeldenummer: 21203200.7
(22) Anmeldetag: 18.10.2021
(51) Int. Cl.: H02J 7/00

(54) **LADEN EINER AKKUMULATOREINHEIT**
CHARGING OF A BATTERY UNIT
CHARGEMENT D'UNE UNITÉ D'ACCUMULATEUR

(30) Priorität: 19.10.2020 DE 102020127500
(43) Veröffentlichungstag der Anmeldung: 20.04.2022
(73) Patentinhaber: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(56) Entgegenhaltungen:
- WO-A1-2013/142964
- US-A1- 2016 204 625

## Beschreibung

Die vorliegende Erfindung betrifft ein Verfahren zum Laden einer Akkumulatoreinheit und ein entsprechendes System.

Bei Akkumulatoren, insbesondere bei Lithium-Ionen-Akkumulatoren, aber auch bei Nickel-Akkumulatoren oder Blei-Akkumulatoren, werden Separatoren eingesetzt, um die jeweiligen Elektroden räumlich und elektrisch voneinander zu trennen. Der Separator ist dabei für die jeweiligen Ladungsträger, also beispielsweise Lithium-Ionen, durchlässig. Materialien, die für Separatoren eingesetzt werden, beinhalten dabei Polymere, beispielsweise Polyethylen, auf Glasfasern basierende Materialien oder sonstige membranartige oder poröse Materialien, insbesondere Kunststoffe oder Keramikmaterialien.

Beim Laden des Akkumulators mit Gleichspannung treten die Ladungsträger, beispielsweise die Lithium-Ionen, durch die Öffnungen oder Poren des Separators, was dazu führen kann, dass diese Poren verstopft oder blockiert werden. Dies führt zu einer Verzögerung des Ladevorgangs durch Erhöhung des Innenwiderstands des Akkumulators und der daraus resultierend thermischen Belastung des Systems. Der Innenwiderstand des Akkumulators hängt dabei von verschiedenen Einflussgrößen, wie dem aktuellen Ladezustand, dem Alterungszustand oder der eingesetzten Zellchemie des Akkumulators ab.

Darüber hinaus können weitere Effekte den Innenwiderstand beeinflussen, wie etwa das Abstreifen von Solvationshüllen oder das Passieren von Grenzschichten durch die Ladungsträger. Solche Grenzschichten können beispielsweise durch teilweise Zersetzung des Elektrolyts an einer Grenzfläche zwischen Elektrode und Elektrolyt entstehen und werden dann auch als Solid-Elektrolyt-Interface, SEI, bezeichnet.

Dokument WO 2013/142964 A1 beschreibt Verfahren zum gepulsten Laden bzw. Entladen von Batterien, beispielsweise für tragbare Elektrowerkzeuge. Beim Laden kann die Batterie für kurze Zeiträume impulsweise geladen werden, wobei Dauer und Periodizität der Ladeimpulse beispielsweise in Abhängigkeit von vom Ladezustand und der geschätzten Innenimpedanz optimiert werden können. Darüber hinaus kann eine Modusumkehr eingesetzt werden, bei der die Zelle nach einem Entladeimpuls kurz gepulst geladen wird oder nach einem Ladeimpuls kurz gepulst entladen wird.

Vor diesem Hintergrund ist es eine Aufgabe der vorliegenden Erfindung, ein verbessertes Konzept zum Laden einer Akkumulatoreinheit anzugeben, durch das die Ladezeit verringert beziehungsweise die Ladegeschwindigkeit erhöht werden kann.

Diese Aufgabe wird gelöst durch den jeweiligen Gegenstand der unabhängigen Patentansprüche. Vorteilhafte Weiterbildungen und bevorzugte Ausführungsformen sind Gegenstand der abhängigen Ansprüche.

Das verbesserte Konzept beruht auf der Idee, die Ladezeit in mehrere aufeinanderfolgende Ladeintervalle aufzuteilen, wobei während jedes Ladeintervalls ein Spannungsimpuls der Ladespannung abhängig von einer Zustandsgröße und/oder abhängig von einem Materialparameter der Akkumulatoreinheit erzeugt wird.

Gemäß dem verbesserten Konzept wird ein Verfahren zum Laden einer Akkumulatoreinheit während einer Vielzahl aufeinanderfolgender Ladeintervalle angegeben. Mittels einer Recheneinheit wird abhängig von wenigstens einer Zustandsgröße der Akkumulatoreinheit und/oder abhängig von wenigstens einem Materialparameter der Akkumulatoreinheit wenigstens ein Impulsparameter bestimmt. Während der Ladeintervalle wird wenigstens ein Spannungsimpuls einer zeitabhängigen Ladespannung zum Laden der Ackumulatoreinheit abhängig von dem wenigstens einen Impulsparameter erzeugt. Insbesondere wird die Akkumulatoreinheit während der Vielzahl von Ladeintervallen durch die Ladespannung geladen, beispielsweise mittels eines Ladegeräts. Während eines Ladeintervalls der Vielzahl von Ladeintervallen wird ein negativer Spannungsimpuls abhängig von dem wenigstens einen Impulsparameter wird, wobei das Ladeintervall nur den negativen Spannungsimpuls enthält und sich die Ladespannung für den Rest des Ladeintervalls linear ändert.

Der negative Spannungsimpuls kann dabei derart ausgestaltet sein, dass sich die Ladespannung während des negativen Spannungsimpulses stets oberhalb der Klemmenspannung befindet, so dass keine Stromumkehr stattfindet. In anderen Ausführungsformen kann die Ladespannung während des negativen Spannungsimpulses die Klemmenspannung unterschreiten, so dass eine Umkehr der Stromrichtung resultiert.

Ein negativer Spannungsimpuls kann als Entspannungsimpuls angesehen werden, der die Kraft, mit der die Ladungsträger gegen den Separator gedrückt werden, reduziert oder gegebenenfalls in ihre Richtung sogar umkehrt, so dass Blockaden der Poren des Separators reduziert oder verhindert werden können.

Die Akkumulatoreinheit ist dabei insbesondere Bestandteil eines Akkumulators, beispielsweise eines Akkupacks für ein Elektrogerät, ein Elektrowerkzeug, ein wenigstens teilweise elektrisch antreibbares Kleinfahrzeug, wie etwa ein Fahrrad oder ein Roller. Der Akkumulator kann auch als Akkumulator für ein wenigstens teilweise elektrisch antreibbares Kraftfahrzeug, beispielsweise einen Pkw, einen Lkw, ein Nutzfahrzeug und so weiter, ausgestaltet sein. In diesem Zusammenhang wird der Akkumulator auch als Hochvolt-Batterie bezeichnet.

Die Akkumulatoreinheit beinhaltet insbesondere eine oder mehrere in Reihe und/oder parallel verschaltete Akkumulatorzellen. Die Akkumulatoreinheit muss dabei jedoch nicht notwendigerweise alle Akkumulatorzellen des Akkumulators beinhalten. Insbesondere können die Akkumulatorzellen des Akkumulators in mehreren Gruppen zusammengefasst sein, wobei die Akkumulatoreinheit einer solchen Gruppe entspricht. Es ist jedoch möglich, dass die Akkumulatoreinheit genau einer Akkumulatorzelle des Akkumulators entspricht oder alle Akkumulatorzellen des Akkumulators enthält.

Eine Akkumulatorzelle der Akkumulatoreinheit beinhaltet dabei insbesondere zwei Elektroden, eine Kathode und eine Anode, wobei zwischen den Elektroden ein Separator angeordnet ist. Bevorzugt handelt es sich bei einer solchen Akkumulatorzelle um eine Lithium-lonen-Akkumulatorzelle.

Je nachdem, welches zellchemische System, auch als Zellchemie bezeichnet, für die Akkumulatorzelle eingesetzt wird, können die Elektroden und der Separator unterschiedliche Materialien umfassen. Die Elektroden können beispielsweise metallische oder sonstige elektrisch leitfähige Trägerfolien beinhalten, die mit Aktivmaterialien beschichtet sind, welche beispielsweise Übergangsmetallverbindungen oder Graphit beinhalten. In typischen Lithium-Kobaltdioxid-Akkumulatoren kommen als Elektroden beispielsweise Kupferfolien und Graphitstrukturen mit eingebetteten Lithium-Ionen sowie Aluminiumfolien mit Lithium-Kobaltdioxid als aktives Material zum Einsatz. Die vorliegende Erfindung ist jedoch nicht auf bestimmte zellchemische Systeme beschränkt. Insbesondere kann durch die Berücksichtigung des wenigstens einen Materialparameters das verbesserte Konzept entsprechend flexibel eingesetzt werden.

Um den wenigstens einen Spannungsimpuls zu erzeugen, können verschiedene Varianten realisiert werden. Beispielsweise kann das Ladegerät dazu eingerichtet sein, die Ladespannung zeitabhängig mit dem wenigstens einen Spannungsimpuls gemäß dem Impulsparameter zu erzeugen. Es ist jedoch auch möglich, dass das Ladegerät eine stückweise konstante Gleichspannung oder linear veränderliche Spannung bereitstellt und die zeitabhängige Ladespannung mit dem wenigstens einen Spannungsimpuls durch den Akkumulator selbst erzeugt wird, insbesondere durch ein Batteriemanagementsystem, BMS, des Akkumulators basierend auf der von dem Ladegerät bereitgestellten Spannung.

Auch für die Recheneinheit ergeben sich verschiedene Möglichkeiten zur Ausgestaltung. Die Recheneinheit kann insbesondere Teil des Ladegeräts oder des Akkumulators, insbesondere des BMS, sein. Die Recheneinheit kann aber auch in Form eines Servercomputers oder Serverrecheneinheit beziehungsweise eines Cloud-Computers implementiert sein, so dass die Recheneinheit in einer drahtlosen Kommunikationsverbindung mit dem Ladegerät und/oder dem Akkumulator steht, um den wenigstens einen Impulsparameter entsprechend bereitzustellen.

Ein Spannungsimpuls kann dabei insbesondere als unipolarer Impuls verstanden werden, gemäß dem sich der Wert der Ladespannung ausgehend von einem Startwert einmalig zu einem von dem Startwert verschiedenen Zielwert ansteigt danach wieder abfällt oder umgekehrt von dem Startwert zu dem Zielwert abfällt und danach wieder ansteigt. Nach Ende des Spannungsimpulses ist der Wert der Ladespannung nicht notwendigerweise gleich dem Startwert. Die Ausgestaltung der Impulsform, insbesondere der Flanken des Spannungsimpulses, kann dabei je nach den konkreten Erfordernissen der Anwendung unterschiedlich sein.

Bei der wenigstens einen Zustandsgröße handelt es sich insbesondere um eine den Zustand der Akkumulatoreinheit beschreibende Größe, die sich im Allgemeinen im Laufe des Betriebs des Akkumulators, also während des Ladens oder Entladens des Akkumulators, und/oder abhängig von Umgebungseinflüssen verändern kann. Die wenigstens eine Zustandsgröße kann beispielsweise einen Ladezustand, SoC, einen Alterungszustand, der beispielsweise als "State of Health", SoH, bezeichnet werden kann, eine Kerntemperatur einer oder mehrerer Akkumulatorzellen der Akkumulatoreinheit, eine Hülltemperatur einer oder mehrerer Akkumulatorzellen der Akkumulatoreinheit, eine Außentemperatur beziehungsweise Umgebungstemperatur der Akkumulatoreinheit und so weiter beinhalten.

Der wenigstens eine Materialparameter der Akkumulatoreinheit ist dagegen zeitunabhängig und hängt von den für die Konstruktion der Akkumulatorzellen verwendeten Materialien ab, insbesondere von den Materialien, welche für die Elektroden, den Separator oder als Elektrolyt verwendet werden. Mit anderen Worten hängt der wenigstens eine Materialparameter von der eingesetzten Zellchemie der Akkumulatorzellen ab.

Der wenigstens eine Impulsparameter kann beispielsweise eine Anzahl von Spannungsimpulsen während des entsprechenden Ladeintervalls, einen Tastgrad oder Duty Cycle, eine Impulsdauer, eine Impulsform, eine Impulshöhe, einen Maximalwert oder Minimalwert für den Impuls, eine Flankenform, eine Flankensteilheit und so weiter beinhalten. Dabei kann der wenigstens eine Impulsparameter gegebenenfalls für unterschiedliche Spannungsimpulse desselben Ladeintervalls unterschiedliche Werte beinhalten. Die Anzahl der Spannungsimpulse pro Ladeintervall kann gleich eins sein oder größer.

Durch die Applikation des wenigstens einen Spannungsimpulses kann verhindert werden, dass Öffnungen oder Poren des Separators durch Ladungsträger, insbesondere Ionen wie Lithium-Ionen, verstopft oder blockiert werden, beziehungsweise können solche Blockaden wenigstens zum Teil beseitigt werden. Bei einem negativen Spannungsimpuls wird die Ladespannung gegenüber dem Startwert auf einen Minimalwert verringert und danach wieder erhöht, während bei einem positiven Spannungsimpuls die Ladespannung ausgehend von dem Startwert auf einen Maximalwert erhöht und danach wieder verringert wird. Bezüglich des Vorzeichens der Spannung wird dabei davon ausgegangen, dass eine positive Ladespannung erforderlich ist, um den Ladezustand der Akkumulatoreinheit zu erhöhen. Bei einem gegebenen Ladezustand der Akkumulatoreinheit existiert insbesondere eine positive Klemmenspannung, auch als State-of-Charge-Spannung bezeichnet, die von der Ladespannung überschritten werden muss, um den Ladezustand zu erhöhen. Ist die Ladespannung dagegen geringer als die Klemmenspannung, so wird der Ladezustand verringert.

Durch den negativen Spannungsimpuls wird die Kraft, mit der die Ladungsträger auf den Separator gepresst werden, vorübergehend verringert, so dass sich die Blockade gegebenenfalls lösen kann. Bei dem negativen Spannungsimpuls muss die Ladespannung dabei jedoch nicht notwendigerweise unter die Klemmenspannung sinken, so dass nicht notwendigerweise eine Stromumkehr stattfindet. Der negative Spannungsimpuls kann jedoch auch eine solche Stromumkehr verursachen, wenn er die Klemmenspannung unterschreitet.

Durch die Berücksichtigung des wenigstens einen Zustandsparameters und/oder des wenigstens einen Materialparameters kann dem komplexen Zusammenhang zwischen verschiedenen Einflussgrößen auf den effektiven Innenwiderstand der Akkumulatoreinheit Rechnung getragen werden. Durch die entsprechende Wahl des wenigstens einen Impulsparameters, der ebenfalls Auswirkungen auf den effektiven Innenwiderstand hat, kann anhand des verbesserten Konzepts besonders spezifisch auf die verwendete Zellchemie beziehungsweise den aktuellen Zustand der Akkumulatoreinheit eingegangen werden, um beispielsweise den effektiven Innenwiderstand möglichst gering zu halten, wobei der effektive Innenwiderstand beispielsweise in einem Zeitraum von einem Ladeintervall betrachtet werden kann. Dadurch wird die Ladegeschwindigkeit, also die Menge an übertragenen Ladungsträgern pro Zeiteinheit, mit anderen Worten der mittlere Ladestrom, erhöht, so dass bei gegebener zu übertragender Gesamtladungsmenge die entsprechende Ladezeit verringert wird.

Gemäß zumindest einer Ausführungsform des Verfahrens nach dem verbesserten Konzept wird mittels der Recheneinheit wenigstens ein zeitlich konstanter Impulsparameter des wenigstens einen Impulsparameters vor Beginn der Vielzahl von Ladeintervallen bestimmt, insbesondere abhängig von dem wenigstens einen Materialparameter und/oder der wenigstens einen Zustandsgröße, und während jedes der Ladeintervalle wird die Ladespannung abhängig von dem wenigstens einen konstanten Impulsparameter erzeugt.

Indem der wenigstens eine konstante Impulsparameter beim Erzeugen der Ladespannung berücksichtigt wird, können der Rechenaufwand und Anpassungsaufwand zum Erzeugen der Ladespannung über die Ladeintervalle hinweg reduziert werden. Dies bietet sich insbesondere bei der Berücksichtigung von zeitlich unabhängigen Einflussgrößen, wie beispielsweise dem wenigstens einen Materialparameter, an oder bei der Berücksichtigung von prinzipiell zeitabhängigen Einflussgrößen, die sich jedoch während einer einzelnen Ladung üblicherweise nicht maßgeblich ändern und daher gegebenenfalls als konstant angesehen werden können, wie beispielsweise der Alterungszustand oder die Umgebungstemperatur. Dadurch kann ein Kompromiss zwischen der möglichst hohen Ladegeschwindigkeit und der Komplexität des zugrunde liegenden Algorithmus zum Bestimmen des wenigstens einen Impulsparameters erzielt werden.

Insbesondere kann der wenigstens eine konstante Impulsparameter bei jedem Ladevorgang erneut vor Beginn der jeweiligen Vielzahl von Ladeintervallen des entsprechenden Ladevorgangs bestimmt werden.

Gemäß zumindest einer Ausführungsform sind alle Impulsparameter des wenigstens einen Impulsparameters während der Vielzahl aufeinanderfolgender Ladeintervalle konstant, insbesondere für einen gegebenen Ladevorgang. Für verschiedene Ladevorgänge, also für verschiedene Vielzahlen von aufeinanderfolgenden Ladeintervallen, können die Impulsparameter sich jedoch voneinander unterscheiden.

Gemäß zumindest einer Ausführungsform wird mittels der Recheneinheit wenigstens ein zeitlich variabler Impulsparameter des wenigstens einen Impulsparameters für jedes der Zeitintervalle individuell abhängig von der wenigstens einen Zustandsgröße bestimmt. Während jedes der Ladeintervalle wird die Ladespannung jeweils abhängig von dem wenigstens einen für das jeweilige Ladeintervall bestimmten variablen Impulsparameter erzeugt.

Mit anderen Worten wird der wenigstens eine Impulsparameter nur für ein einzelnes der Ladeintervalle festgelegt und für spätere Ladeintervalle gegebenenfalls verändert. Dadurch kann der zeitlichen Veränderung der wenigstens einen Zustandsgröße Rechnung getragen werden, so dass der wenigstens eine Impulsparameter für jedes Ladeintervall optimal angepasst werden kann, insbesondere um den effektiven Innenwiderstand oder einen mittleren Wert für den effektiven Innenwiderstand zu reduzieren oder minimieren. Mit anderen Worten wird also eine dynamisch geführte Ladespannung realisiert, die in die einzelnen Ladeintervalle unterteilt ist, wobei über die gesamte Ladezeit hinweg der wenigstens eine Impulsparameter angepasst wird beziehungsweise geführt wird, insbesondere um die daraus resultierenden Innenwiderstände pro Ladeintervall zu minimieren oder in ihrer Summe zu minimieren. Dadurch wird die thermische Belastung der Ackumulatorzellen der Akkumulatoreinheit reduziert, und gleichzeitig werden höhere Ladeströme beziehungsweise kürzere Ladezeiten ermöglicht.

Gemäß zumindest einer Ausführungsform wird der wenigstens eine variable Impulsparameter mittels der Recheneinheit für jedes der Ladeintervalle anhand einer Nachschlagetabelle bestimmt, wobei die Nachschlagetabelle die wenigstens eine Zustandsgröße und/oder den wenigstens einen Materialparameter dem wenigstens einen Impulsparameter zuordnet.

Die Nachschlagetabelle, die beispielsweise auch als Umsetzungstabelle oder Look-up-Tabelle bezeichnet werden kann, ist dabei gegebenenfalls mehrdimensional ausgestaltet, so dass mehreren Zustandsgrößen und/oder Materialparametern einer oder mehrere Impulsparameter zugeordnet werden können. Die Nachschlagetabelle ist dabei insbesondere auf einer Speichereinheit, beispielsweise der Recheneinheit, des Akkumulators oder des Ladegeräts gespeichert. Die Nachschlagetabelle kann auch auf einer sonstigen externen Speichereinheit, beispielsweise einer Cloudspeichereinheit, gespeichert sein.

Durch den Einsatz der Nachschlagetabelle kann eine schnelle Bestimmung des wenigstens einen Impulsparameters ohne relevanten Rechenaufwand erreicht werden.

Gemäß zumindest einer Ausführungsform wird der wenigstens eine variable Impulsparameter mittels der Recheneinheit für jedes der Ladeintervalle anhand eines vordefinierten Modells bestimmt, wobei das Modell die wenigstens eine Zustandsgröße und/oder den wenigstens einen Materialparameter mit einem Innenwiderstand oder einem effektiven Innenwiderstand der Akkumulatoreinheit in Beziehung setzt.

Das Modell kann dabei als Funktionalzusammenhang zwischen der wenigstens einen Zustandsgröße und/oder dem wenigstens einen Materialparameter einerseits und dem effektiven Innenwiderstand andererseits angesehen werden. Der effektive Innenwiderstand ist dabei außerdem funktional von dem wenigstens einen Impulsparameter abhängig, so dass in solchen Ausführungsformen durch entsprechende Bestimmung oder Definition des wenigstens einen Impulsparameters bei gegebener wenigstens einer Zustandsgröße und/oder wenigstens einem Materialparameter der effektive Innenwiderstand minimiert werden kann.

Unter dem effektiven Innenwiderstand kann dabei der Quotient aus der kumulierten oder integrierten Ladespannung oberhalb der Klemmenspannung und der kumulierten oder integrierten Stromstärke für ein gegebenes Ladeintervall verstanden werden.

Insbesondere kann die zeitabhängige Ladespannung während eines Ladeintervalls zeitweise oberhalb der Klemmenspannung und zeitweise unterhalb der Klemmenspannung liegen. Der entsprechende Strom ist dann negativ, während die Ladespannung unterhalb der Klemmenspannung liegt und ansonsten positiv. Die zeitliche Integration der Differenz zwischen Ladespannung und Klemmenspannung geteilt durch die zeitliche Integration über die Stromstärke, entspricht dann dem effektiven Innenwiderstand für das betrachtete Ladeintervall.

Durch den Einsatz des vorab bestimmten Modells kann der Einfluss des wenigstens einen Materialparameters und/oder des wenigstens einen Zustandsparameters sowie des wenigstens einen Impulsparameters auf den effektiven Innenwiderstand noch genauer berücksichtigt werden, so dass die thermische Belastung noch weiter reduziert werden kann und dementsprechend die Ladegeschwindigkeit weiter erhöht werden kann.

Sowohl die Nachschlagetabelle als auch das Modell können insbesondere vorab in experimentellen Testreihen empirisch bestimmt werden, wobei wenigstens zum Teil auch analytische Zusammenhänge zwischen den Einflussgrößen und dem effektiven Innenwiderstand ausgenutzt und berücksichtigt werden können.

Gemäß zumindest einer Ausführungsform wird der durch die Ladespannung hervorgerufene Ladestrom während des negativen Spannungsimpulses so verändert, dass die Stromstärke des Ladestroms vorübergehend wenigstens näherungsweise gleich Null ist und/oder die Stromrichtung des Ladestroms vorübergehend umgekehrt wird. Dadurch lässt sich die Wirkung des Entspannungsimpulses vergrößern.

Gemäß zumindest einer Ausführungsform wird der wenigstens eine Impulsparameter mittels der Recheneinheit abhängig von einer vorgegebenen Soll-Ladegeschwindigkeit bestimmt.

Die Ladegeschwindigkeit kann dabei als mittlere Ladestromstärke oder im Mittel übertragene Ladung pro Zeit verstanden werden. Je höher die vorgegebene Soll-Ladegeschwindigkeit ist, desto kürzer können beispielsweise negative Spannungsimpulse ausfallen.

Gemäß zumindest einer Ausführungsform wird der wenigstens eine Impulsparameter mittels der Recheneinheit abhängig von einem aktuellen Ladezustand der Akkumulatoreinheit und/oder abhängig von einem aktuellen Alterungszustand der Akkumulatoreinheit und/oder abhängig von einer aktuellen Temperatur der Akkumulatoreinheit und/oder abhängig von einer aktuellen Umgebungstemperatur der Akkumulatoreinheit bestimmt.

Die Temperatur der Akkumulatoreinheit kann dabei insbesondere einer Zellkerntemperatur oder Hülltemperatur einer oder mehrerer Akkumulatorzellen der Akkumulatoreinheit entsprechen.

Gemäß zumindest einer Ausführungsform wird der wenigstens eine Impulsparameter mittels der Recheneinheit abhängig von einem zellchemischen System der Akkumulatoreinheit bestimmt.

Insbesondere beinhaltet der wenigstens eine Materialparameter Parameter, welche das zellchemische System der Akkumulatoreinheit definieren. Das zellchemische System, auch als Zellchemie der Akkumulatoreinheit bezeichnet, ist insbesondere gegeben durch die eingesetzten Materialien und deren Eigenschaften.

Gemäß zumindest einer Ausführungsform wird der Innenwiderstand, insbesondere der effektive Innenwiderstand, der Akkumulatoreinheit im Laufe eines ersten Teils der aufeinanderfolgenden Ladeintervalle minimiert, indem, insbesondere mittels der Recheneinheit, die jeweiligen Werte des wenigstens einen Impulsparameters variiert werden, insbesondere von Ladeintervall zu Ladeintervall. Die Ladespannung wird während eines zweiten Teils der aufeinanderfolgenden Ladeintervalle gemäß dem wenigstens einen optimalen Impulsparameter erzeugt.

Bei dem ersten Teil der Ladeintervalle handelt es sich insbesondere um eine Untermenge der Vielzahl von Ladeintervallen, wobei die Ladeintervalle des ersten Teils ebenfalls aufeinanderfolgen. Bei dem zweiten Teil der Ladeintervalle handelt es sich insbesondere um eine weitere Untermenge der Vielzahl von Ladeintervallen, wobei die Ladeintervalle des zweiten Teils ebenfalls aufeinanderfolgen und auf die Ladeintervalle des ersten Teils folgen, insbesondere unmittelbar folgen.

Für jedes Ladeintervall des ersten Teils kann der wenigstens eine Impulsparameter jeweils variiert werden und der sich daraufhin während des entsprechenden Ladeintervalls einstellende effektive Innenwiderstand kann gemessen oder abgeschätzt werden. Wird auf diese ein Minimalwert für den effektiven Innenwiderstand erreicht, so kann der resultierenden wenigstens eine optimale Impulsparameter gespeichert und für die darauffolgenden Ladeintervalle des zweiten Teils eingestellt und beibehalten werden, beispielsweise bis zum Ende des Ladevorgangs. Dadurch kann der mittlere effektive Innenwiderstand über den gesamten Ladevorgang hinweg besonders effektiv reduziert werden.

Gemäß dem verbesserten Konzept wird auch ein System zum Laden einer Akkumulatoreinheit während einer Vielzahl aufeinanderfolgender Ladeintervalle angegeben. Das System weist eine Recheneinheit auf, die dazu eingerichtet ist, abhängig von wenigstens einer Zustandsgröße der Akkumulatoreinheit und/oder abhängig von wenigstens einem Materialparameter der Akkumulatoreinheit wenigstens einen Impulsparameter zu bestimmen. Das System weist eine Steuereinheit auf, die dazu eingerichtet ist, während der Ladeintervalle wenigstens einen Spannungsimpuls einer zeitabhängigen Ladespannung abhängig von dem wenigstens einen Impulsparameter zu erzeugen und die Ladespannung der Akkumulatoreinheit zur Verfügung zu stellen, um die Akkumulatoreinheit zu laden, wobei während eines Ladeintervalls der Vielzahl von Ladeintervallen ein negativer Spannungsimpuls abhängig von dem wenigstens einen Impulsparameter erzeugt wird, wobei das Ladeintervall nur den negativen Spannungsimpuls enthält und sich die Ladespannung für den Rest des Ladeintervalls linear ändert.

Die wenigstens eine Zustandsgröße kann dabei beispielsweise mittels eines oder mehrerer Sensoren, die beispielsweise Teil des Systems sein können, gemessen werden und/oder basierend auf entsprechenden Messgrößen berechnet oder geschätzt werden. Der wenigstens eine Materialparameter kann beispielsweise auf einer Speichereinheit des Systems, insbesondere der Recheneinheit, gespeichert sein.

Die Recheneinheit ist drahtlos oder drahtgebunden mit der Steuereinheit verbunden, um den wenigstens einen Impulsparameter an diese zu übertragen. Die Recheneinheit und die Steuereinheit können dabei Teil derselben Komponente des Systems sein oder unterschiedlichen Komponenten angehören. Insbesondere können die Recheneinheit und die Steuereinheit beide Teil des Ladegeräts sein, das zum Laden der Akkumulatoreinheit mit dem Akkumulator verbunden werden kann. In anderen Ausführungsformen können die Recheneinheit und die Steuereinheit beide Teil des Akkumulators sein. In weiteren Ausführungsformen kann das Ladegerät die Recheneinheit beinhalten und der Akkumulator die Steuereinheit oder umgekehrt. In weiteren Ausführungsformen kann die Recheneinheit als Serverrecheneinheit ausgestaltet sein, und die Steuereinheit kann Teil des Ladegeräts und/oder des Akkumulators sein.

Gemäß zumindest einer Ausführungsform des Systems beinhaltet das System die Akkumulatoreinheit und die Akkumulatoreinheit weist eine oder mehrere Akkumulatorzellen auf, insbesondere eine oder mehrere Lithium-Ionen-Akkumulatorzellen.

Das zellchemische System der Lithium-Ionen-Akkumulatorzelle kann beispielsweise einem Lithium-Ionen-Kobaltdioxid-System, einem Lithium-Nickel-Mangan-Kobalt-System, einem Lithium-Nickel-Kobalt-Aluminium-System, einem Lithium-Mangan-System, einem Lithium-Eisen-Phosphat-System oder einem Lithium-Titanat-System entsprechen. Der Elektrolyt der Akkumulatorzellen kann flüssig sein oder es kann sich bei den Akkumulatorzellen um Lithium-Polymer-Akkumulatorzellen handeln.

Gemäß zumindest einer Ausführungsform des Systems weist das System das Ladegerät und/oder den Akkumulator und/oder die Serverrecheneinheit auf.

Gemäß zumindest einer Ausführungsform weist das System das Ladegerät auf, und das Ladegerät ist zum Verbinden der Akkumulatoreinheit mit dem Ladegerät eingerichtet, wobei das Ladegerät die Recheneinheit beinhaltet.

Die Steuereinheit kann ebenfalls von dem Ladegerät beinhaltet sein oder von der Akkumulatoreinheit und mit der Recheneinheit in drahtloser oder drahtgebundener Verbindung stehen.

Gemäß zumindest einer Ausführungsform weist das System den Akkumulator auf, der die Akkumulatoreinheit beinhaltet, und der Akkumulator, insbesondere ein BMS des Ackumulators, beinhaltet die Recheneinheit.

Die Steuereinheit kann ebenfalls Teil des Akkumulators sein oder von dem Ladegerät beinhaltet sein und mit der Recheneinheit in drahtloser oder drahtgebundener Kommunikationsverbindung stehen.

Gemäß zumindest einer Ausführungsform beinhaltet das System die Serverrecheneinheit, und die Serverrecheneinheit beinhaltet die Recheneinheit.

Die Serverrecheneinheit kann auch als Teil einer Cloud oder eines Internet-of-Things verstanden werden. In solchen Ausführungsformen beinhaltet beispielsweise der Akkumulator oder das Ladegerät die Steuereinheit und die Steuereinheit steht in drahtloser Kommunikationsverbindung mit der Recheneinheit.

Ausführungsformen, bei denen die Serverrecheneinheit die Recheneinheit beinhaltet, sind insbesondere vorteilhaft bei der modellbasierten Bestimmung des wenigstens einen Impulsparameters oder der Bestimmung des wenigstens einen Impulsparameters basierend auf der Nachschlagetabelle, da Modifikationen und Verbesserungen des Modells beziehungsweise der Nachschlagetabelle eingepflegt werden können, ohne dass dazu auf das Ladegerät beziehungsweise den Akkumulator selbst zugegriffen werden muss.

Gemäß zumindest einer Ausführungsform weist das System das Ladegerät auf, und das Ladegerät beinhaltet die Steuereinheit. Gemäß zumindest einer Ausführungsform weist das System den Akkumulator auf, und der Akkumulator, insbesondere das Batteriemanagementsystem, beinhaltet die Steuereinheit.

Gemäß zumindest einer Ausführungsform beinhaltet das System, insbesondere die Recheneinheit, die Speichereinheit und die Speichereinheit speichert die Nachschlagetabelle, welche der wenigstens einen Zustandsgröße und/oder dem wenigstens einen Materialparameter den wenigstens einen Impulsparameter zuordnet. Die Recheneinheit ist dazu eingerichtet, den wenigstens einen Impulsparameter anhand der Nachschlagetabelle zu bestimmen.

Weitere Ausführungsformen des Systems nach dem verbesserten Konzept folgen direkt aus den verschiedenen Ausführungsformen des Verfahrens nach dem verbesserten Konzept und umgekehrt. Insbesondere kann ein System nach dem verbesserten Konzept dazu eingerichtet sein, ein Verfahren nach dem verbesserten Konzept durchzuführen oder das System führt ein solches Verfahren durch.

Gemäß dem verbesserten Konzept wird auch ein Computerprogramm mit Befehlen angegeben, die bei Ausführung des Computerprogramms durch ein System nach dem verbesserten Konzept das System dazu veranlassen, ein Verfahren nach dem verbesserten Konzept durchzuführen.

Gemäß dem verbesserten Konzept wird auch ein computerlesbares Speichermedium angegeben, welches ein Computerprogramm nach dem verbesserten Konzept speichert.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

In den Figuren zeigen
- Fig. 1: eine Blockdarstellung einer beispielhaften Ausführungsform eines Systems zum Laden einer Akkumulatoreinheit nach dem verbesserten Konzept;
- Fig. 2: eine Blockdarstellung einer weiteren beispielhaften Ausführungsform eines Systems nach dem verbesserten Konzept;
- Fig. 3: eine Blockdarstellung einer weiteren beispielhaften Ausführungsform eines Systems nach dem verbesserten Konzept;
- Fig. 4: eine Blockdarstellung einer weiteren beispielhaften Ausführungsform eines Systems nach dem verbesserten Konzept;
- Fig. 5: eine Blockdarstellung einer weiteren beispielhaften Ausführungsform eines Systems nach dem verbesserten Konzept;
- Fig. 6: eine schematische Darstellung eines Strom- und Spannungsverlaufs während einer Vielzahl aufeinanderfolgender Ladeintervalle; und
- Fig. 7: eine schematische Darstellung verschiedener Impulsformen.

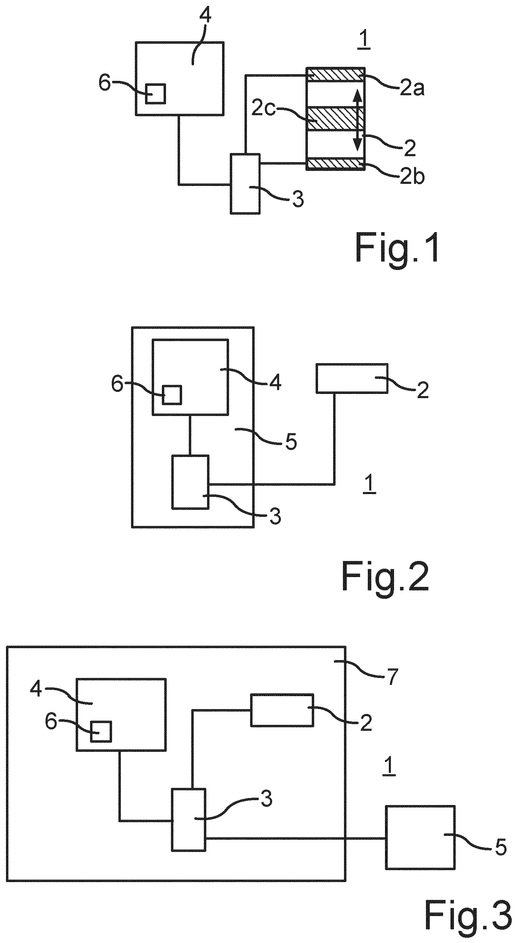

In Fig. 1 ist eine Blockdarstellung einer beispielhaften Ausführungsform eines Systems 1 zum Laden einer Akkumulatoreinheit 2 dargestellt. Die Akkumulatoreinheit 2 ist in Fig. 1 schematisch als einzelne Akkumulatorzelle mit einer Kathode 2a, einer Anode 2b und einem dazwischenliegenden Separator 2c gezeigt. Dies ist jedoch lediglich beispielhaft zu verstehen, so dass die Akkumulatoreinheit 2 in verschiedenen Ausführungsform auch zwei oder mehr Akkumulatorzellen beinhalten kann, die in Reihe oder parallel zueinander verschaltet sein können.

Das System 1 beinhaltet eine Steuereinheit 3 und eine Recheneinheit 4. Die Steuereinheit 3 ist mit den Elektroden 2a, 2b der Akkumulatoreinheit 2 und mit der Recheneinheit 4 verbindbar.

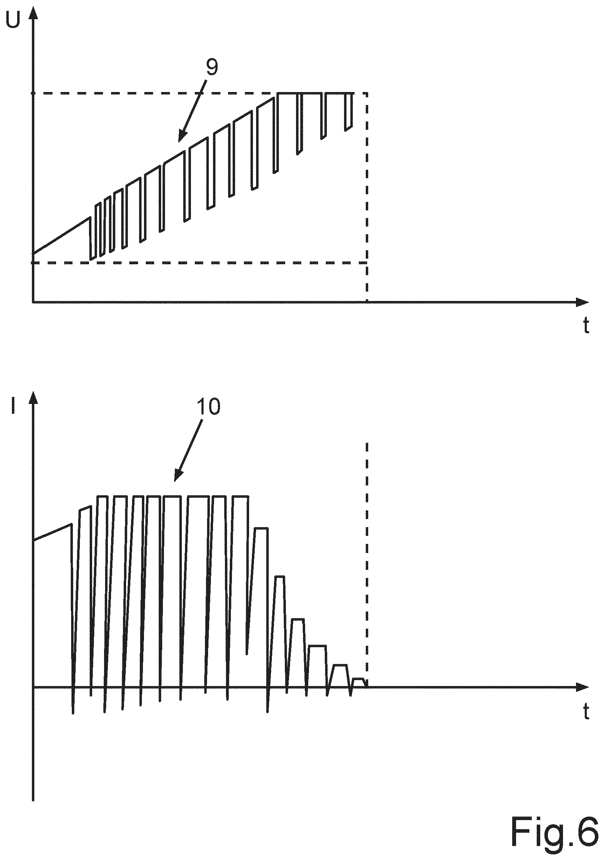

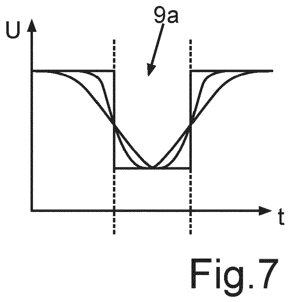

Die Recheneinheit 4 kann abhängig von wenigstens einer Zustandsgröße der Akkumulatoreinheit 2 und/oder abhängig von wenigstens einem Materialparameter der Akkumulatoreinheit 2 wenigstens einen Impulsparameter bestimmen und diesen an die Steuereinheit 3 übermitteln. Die Steuereinheit 3 kann dann abhängig von dem wenigstens einen Impulsparameter eine zeitabhängige Ladespannung erzeugen und der Akkumulatoreinheit 2 an den Elektroden 2a, 2b zur Verfügung stellen, um die Akkumulatoreinheit 2 während einer Vielzahl aufeinanderfolgender Ladeintervalle zu laden, wie es schematisch in Fig. 6 und Fig. 7 dargestellt ist.

In Fig. 6 ist die Ladespannung U als Funktion der Zeit t gezeigt. Im Mittel steigt die Ladespannung U dabei über die Zeit t zum Beispiel näherungsweise linear an, um der sich während des Ladevorgangs verändernden Klemmenspannung U_{SOC} an den Elektroden 2a, 2b der Akkumulatoreinheit 2 Rechnung zu tragen, wobei der näherungsweise lineare Anstieg gegen Ende des Ladevorgangs abflacht. Dem linearen Anstieg der Spannung U sind die Spannungsimpulse 9 gemäß dem verbesserten Konzept überlagert. Im unteren Teil der Fig. 6 ist der zugehörige Ladestrom I als Funktion der Zeit t dargestellt. Entsprechend des näherungsweise linearen Anstiegs der mittleren Ladespannung ist der Ladestrom im Mittel näherungsweise konstant und nimmt gegen Ende des Ladevorgangs ab und geht schließlich gegen Null. Entsprechend der Spannungsimpulse 9 ergeben sich im zeitlichen Verlauf des Stroms I Stromimpulse 10.

Der Verlauf der Spannungsimpulse 9 und der resultierende Verlauf der Stromimpulse 10, wie er in Fig. 6 gezeigt ist, ist lediglich als Beispiel zu verstehen.

Auch ist die Pulsform nicht notwendigerweise rechteckig und die Flankenform der Spannungsimpulse 9 kann je nach Erfordernissen variieren, wie in Fig. 7 beispielhaft für einen negativen Spannungsimpuls 9a angedeutet.

Um den wenigstens einen Impulsparameter abhängig von den Zustandsgrößen und/oder den Materialparametern zu bestimmen, kann die Recheneinheit 4 in manchen Ausführungsformen abhängig von dem zellchemischen System der Akkumulatorzellen der Ackumulatoreinheit 2 feste Impulsparameter festlegen, die für den gesamten Ladevorgang konstant bleiben. Die Informationen betreffend das zellchemische System können dabei beispielsweise auf einer Speichereinheit 6 gespeichert sein, wobei die Recheneinheit 4, die Steuereinheit 3 oder der Akkumulator die Speichereinheit 6 beinhalten kann. Welche Komponente des Systems 1 die Speichereinheit 6 letztlich beinhaltet, kann gegebenenfalls abhängig davon festgelegt sein, ob die Recheneinheit 4 beziehungsweise die Steuereinheit 3 Teil des Akkumulators oder des Ladegeräts ist.

In weiteren Ausführungsformen kann die Speichereinheit 6 eine Nachschlagetabelle speichern, die den Zustandsgrößen und/oder den Materialparametern die Impulsparameter zuordnet. Dadurch kann eine gewisse Dynamik während des Ladevorgangs erreicht werden, ohne dass komplexe Rechenoperationen notwendig sind.

In weiteren Ausführungsformen kann die Speichereinheit 6 ein Modell oder einen Funktionalzusammenhang zwischen den Impulsparametern, den Zustandsgrößen und/oder den Materialparametern einerseits und dem effektiven Innenwiderstand andererseits speichern. In solchen Ausführungsformen kann die Recheneinheit 4 beispielsweise abhängig von den aktuellen Zustandsgrößen und/oder abhängig von den Materialparametern die Impulsparameter, gegebenenfalls unter Einhaltung vorgegebener Randbedingungen, so bestimmen, dass der Innenwiderstand möglichst gering wird. Dadurch kann die Effektivität des Verfahrens beziehungsweise des Systems 1 weiter erhöht werden. Wurden Impulsparameter bestimmt, die zu einem minimalen Innenwiderstand führen, so können diese Impulsparameter beispielsweise für den Rest des Ladevorgangs oder einen Teil davon eingestellt und beibehalten werden.

Die zeitabhängige Klemmenspannung U_{SOC} kann als diejenige elektrische Potentialdifferenz verstanden werden, die, wenn sie als Ladespannung eingestellt wird, gerade ausreicht, um den inneren Antrieb beziehungsweise die elektromotorische Kraft der jeweiligen Akkumulatoreinheit 2 zu kompensieren, so dass die Akkumulatoreinheit 2 weder geladen oder entladen wird.

Dynamische Effekte, die beim Bewegen der Ladungsträger durch die involvierten Medien, insbesondere beim Durchschreiten von Grenzschichten, insbesondere eines Solid-Elektrolyt-Interface, SEI, beim Durchschreiten oder Durchtunneln von Poren des Separators 2c oder beim Abstreifen von Solvationshüllen et cetera auftreten, können zu Staubildungen oder Filmbildungen, insbesondere an dem Separator 2c, und zu dementsprechenden nicht-linearen Störungen der Ionen-Wanderung führen. Damit einhergehend steigt der effektive Innenwiderstand und entsprechende thermische Verluste im Inneren der Akkumulatorzellen resultieren. Dadurch ist der Ladestrom effektiv auf Werte begrenzt, bei denen die Wärmedissipation in die Umgebung noch ausreichend ist, um die Zellerwärmung im Inneren der Akkumulatoreinheit 2 unterhalb einer kritischen Grenze zu halten.

Durch das verbesserte Konzept wird der Antrieb zielgerichtet für jedes der Ladeintervalle modifiziert, um diese nicht-linearen Effekte aufzubrechen und so die thermischen Verluste, die ansteigenden Innenwiderstände jedenfalls teilweise zu kompensieren. Dies kann beispielsweise durch den negativen Spannungsimpuls 9a erfolgen, der zu einer Reduktion oder gar zu einem vollständigen Entzug der Triebkraft für die Ionen-Wanderung führt. Solche negativen Spannungsimpulse 9a können dementsprechend auch als Entlastungsimpulse verstanden werden.

Die Frequenz, Amplitude, Pulsbreite und so weiter der Spannungsimpulse 9, also der wenigstens eine Impulsparameter, können dabei abhängig von der eingesetzten Zellchemie, dem aktuellen Ladezustand, Temperaturen der Akkumulatoreinheit 2, einem Alterungszustand sowie von der angestrebten Ladegeschwindigkeit von der Recheneinheit 4 bestimmt werden. Der effektive Innenwiderstand kann als Maß für die Effektivität der bestimmten Impulsparameter für das entsprechende Ladeintervall angesehen werden.

In verschiedenen Ausführungsformen des verbesserten Konzepts können die Impulsparameter daher dynamisch geführt werden, um eine dynamisch veränderliche Ladespannungskurve zu erreichen, für die die einzelnen Parameter Δt, ΔU, ΔU', die Länge der einzelnen Ladeintervalle und so weiter über den Ladevorgang hinweg so verändert werden können, dass die daraus resultierenden effektiven Innenwiderstände für die einzelnen Ladeintervalle in ihrer Summe minimiert werden. Dadurch kann die thermische Belastung der Akkumulatoreinheit 2 reduziert werden und es können höhere resultierende Ladeströme beziehungsweise kürzere Ladezeiten realisiert werden.

In Fig. 2 ist eine Blockdarstellung einer weiteren beispielhaften Ausführungsform des Systems nach dem verbesserten Konzept gezeigt, die auf der Ausführungsform der Fig. 1 beruht. In der Ausführungsform der Fig. 2 beinhaltet das System 1 ein Ladegerät 5, welches sowohl die Recheneinheit 4 als auch die Steuereinheit 3 beinhaltet.

In Fig. 3 ist eine Blockdarstellung einer beispielhaften weiteren Ausführungsform des Systems 1 nach dem verbesserten Konzept dargestellt, die ebenfalls auf der Ausführungsform der Fig. 1 beruht. Hier beinhaltet das System 1 den Akkumulator 7, der neben der Akkumulatoreinheit 2 sowohl die Recheneinheit 4 als auch die Steuereinheit 3 beinhaltet.

In solchen Ausführungsformen stellt das Ladegerät 5 beispielsweise eine variable Gleichspannung zur Verfügung, und die Steuereinheit wandelt diese in die Ladespannung inklusive der Spannungsimpulse 9 um.

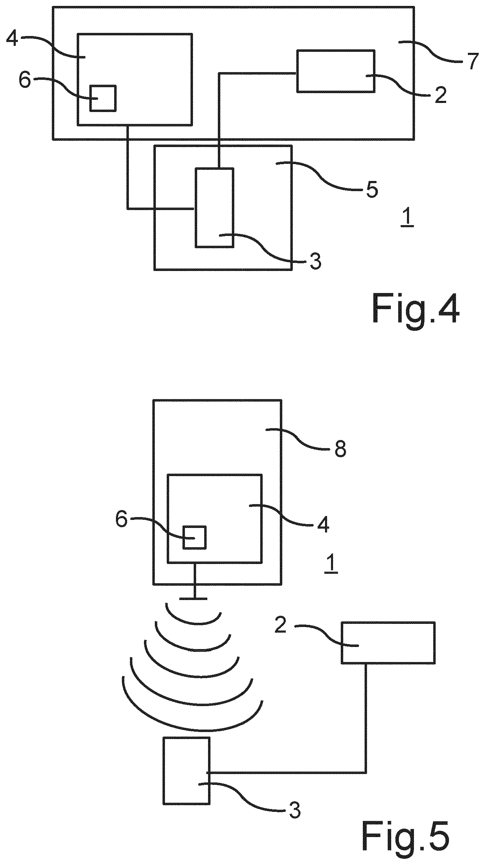

In Fig. 4 ist eine Blockdarstellung einer weiteren beispielhaften Ausführungsform eines Systems 1 nach dem verbesserten Konzept gezeigt, die auf der Ausführungsform der Fig. 1 beruht.

In der Ausführungsform der Fig. 4 beinhaltet der Akkumulator 7 die Recheneinheit 4, und das Ladegerät 5 beinhaltet die Steuereinheit 3, so dass das Ladegerät 5 die Ladespannung inklusive der Spannungsimpulse 9 bereitstellen kann. Es sind außerdem Ausführungsformen denkbar, bei denen der Akkumulator 7 die Steuereinheit 3 beinhaltet und das Ladegerät die Recheneinheit 4.

In Fig. 5 ist eine Blockdarstellung einer weiteren beispielhaften Ausführungsform des Systems 1 nach dem verbesserten Konzept dargestellt, die auf der Ausführungsform der Fig. 1 beruht. In der Ausführungsform der Fig. 5 ist ein Serversystem 8, insbesondere eine Computer-Cloud, dargestellt, die die Recheneinheit 4 beinhaltet und in Funkverbindung mit der Steuereinheit 3 steht.

Wie beschrieben, insbesondere hinsichtlich der Figuren, ermöglicht es das verbesserte Konzept, eine Akkumulatoreinheit in kürzerer Zeit zu laden. Dazu wird insbesondere der mittlere effektive Innenwiderstand der Akkumulatoreinheit optimiert beziehungsweise minimiert, indem Impulsparameter für wenigstens einen Spannungsimpuls der Ladespannung abhängig von wenigstens einer Zustandsgröße und/oder abhängig von wenigstens einem Materialparameter bestimmt werden.

Die Ladezeit wird in einzelne Ladeintervalle variabler Länge aufgeteilt. Innerhalb eines Ladeintervalls wird die Ladespannung in ihrer Höhe systematisch verändert. Bevorzugt kann beispielsweise zu Beginn des Ladeintervalls die Ladespannung um einen gewissen Wert und für eine gewisse Zeit reduziert werden und anschließend auf eine, gegebenenfalls gegenüber der ursprünglichen Spannung um einen bestimmten Wert erhöhte, Spannung gebracht werden. Dadurch kann näherungsweise der Antriebsverlust für die Ladungsbewegung in der Zelle durch die anfängliche Entlastung ausgeglichen werden. Der Flankenverlauf der Spannungsimpulse kann anhand der zur Verfügung stehenden elektrotechnischen oder elektronischen, beispielsweise spannungssteuerungstechnischen oder regelungstechnischen Ausstattung angepasst beziehungsweise optimiert werden, so dass die Ladezeit gemäß aus experimentellen Untersuchungen bekannten Zusammenhängen minimiert werden kann.

In anderen Ausführungsformen sind umgekehrte Spannungsverläufe vorgesehen, wobei zunächst die Ladespannung angehoben wird und anschließend innerhalb desselben Ladeintervalls abgesenkt wird. Sowohl die Dauer des Ladeintervalls als auch die Dauer der einzelnen Spannungsimpulse und deren Höhe können geeignet entsprechend einer geplanten Ladegeschwindigkeit, abhängig von dem elektrochemischen System, dem Ladezustand, dem Zellzustand, dem Zellalterungszustand, der Zellkerntemperatur, der Zellhülltemperatur, der Außentemperatur und so weiter modifiziert werden, so dass der resultierende effektive Innenwiderstand möglichst gering ausfällt.

Die Parametrisierung der Spannungsimpulse kann beispielsweise anhand mehrdimensionaler Nachschlagetabellen, auch als multidimensionale Look-up-Tabellen bezeichnet, erfolgen oder auch anhand von Funktionalzusammenhängen, welche für eine bestimmte Akkumulatorzelle aus Reihenuntersuchungen unter Laborbedingungen bekannt sein kann.

Die Impulsparameter können persistent in dem System gespeichert werden, beispielsweise in dem Akkumulator, dem Ladegerät oder einer externen Speichereinheit, beispielsweise einer Servereinheit, einem Netzwerkdatenspeicher, einer Computer-Cloud, einer mittels Internet-of-Things verbundenen Cloud und so weiter. Das Ladegerät beziehungsweise die Steuereinheit stellt dann die definierte Parametrisierung ein, um die Ackumulatoreinheit zu laden.

In bevorzugten Ausführungsformen wertet das Ladegerät oder das Batteriemanagementsystem oder die Recheneinheit den effektiven Innenwiderstand für jede oder zumindest für mehrere der Ladeintervalle aus und optimiert die Impulsparameter, um den Innenwiderstand zu minimieren. Dies kann beispielsweise durch Variation der Impulsparameter und Bewertung der resultierenden Ergebnisse von Ladeintervall zu Ladeintervall erfolgen, wobei beispielsweise übliche Optimierungsverfahren, wie lineare oder nicht-lineare Optimierungsverfahren, Gradienten-Crawler, Newton-Verfahren, evolutionäre Verfahren und so weiter oder auf maschinellem Lernen oder künstlicher Intelligenz basierende Optimierungsverfahren eingesetzt werden können. Um gegebenenfalls nicht direkt messbare Parameter, beispielsweise die Zellkerntemperatur, einbeziehen zu können oder um Effekte durch Sensorrauschen zu minimieren, können beispielsweise Kalman-Filter oder ähnliche Algorithmen vorgesehen werden.

### BEZUGSZEICHENLISTE:

- 1: System
- 2: Akkumulatorzelle
- 2a: Kathode
- 2b: Anode
- 2c: Separator
- 3: Steuereinheit
- 4: Recheneinheit
- 5: Ladegerät
- 6: Speichereinheit
- 7: Akkumulator
- 8: Serversystem
- 9: Spannungsimpulse
- 9a: Spannungsimpuls
- 10: Stromimpulse

## Patentansprüche

1. Verfahren zum Laden einer Akkumulatoreinheit (2) während einer Vielzahl aufeinanderfolgender Ladeintervalle, wobei
- mittels einer Recheneinheit (4) abhängig von wenigstens einer Zustandsgröße der Akkumulatoreinheit (2) und/oder abhängig von wenigstens einem Materialparameter der Akkumulatoreinheit (2) wenigstens ein Impulsparameter bestimmt wird; und
- während der Ladeintervalle wenigstens ein Spannungsimpuls (9, 9a, 9b) einer zeitabhängigen Ladespannung abhängig von dem wenigstens einen Impulsparameter erzeugt wird;
- während eines Ladeintervalls der Vielzahl von Ladeintervallen ein negativer Spannungsimpuls (9a) abhängig von dem wenigstens einen Impulsparameter erzeugt wird, wobei das Ladeintervall nur den negativen Spannungsimpuls (9a) enthält und sich die Ladespannung für den Rest des Ladeintervalls linear ändert.

2. Verfahren nach Anspruch 1, wobei
- wenigstens ein konstanter Impulsparameter des wenigstens einen Impulsparameters vor Beginn der Ladeintervalle bestimmt wird; und
- während jedes der Ladeintervalle die Ladespannung abhängig von dem wenigstens einen konstanten Impulsparameter erzeugt wird.

3. Verfahren nach einem der vorherigen Ansprüche, wobei
- wenigstens ein variabler Impulsparameter des wenigstens einen Impulsparameters für jedes der Ladeintervalle individuell abhängig von der wenigstens einen Zustandsgröße bestimmt wird; und
- während jedes der Ladeintervalle die Ladespannung jeweils abhängig von dem wenigstens einen variablen Impulsparameter erzeugt wird.

4. Verfahren nach Anspruch 3, wobei der wenigstens eine variable Impulsparameter für jedes der Ladeintervalle anhand einer Nachschlagetabelle bestimmt wird, welche der wenigstens einen Zustandsgröße und/oder dem wenigstens einen Materialparameter den wenigstens einen Impulsparameter zuordnet.

5. Verfahren nach Anspruch 3, wobei der wenigstens eine variable Impulsparameter für jedes der Ladeintervalle anhand eines vordefinierten Modells bestimmt wird, wobei das Modell die wenigstens eine Zustandsgröße und/oder den wenigstens einen Materialparameter mit einem Innenwiderstand der Akkumulatoreinheit (2) in Beziehung setzt.

6. Verfahren nach einem der vorhergehenden Ansprüche, wobei während des negativen Spannungsimpulses (9a) ein durch die Ladespannung hervorgerufener Ladestrom so verändert wird, dass die Stromstärke des Ladestroms (10, 10a, 10b) wenigstens näherungsweise gleich Null ist und/oder die Stromrichtung des Ladestroms (10, 10a, 10b) umgekehrt wird.

7. Verfahren nach einem der vorhergehenden Ansprüche, wobei der wenigstens eine Impulsparameter abhängig von einer vorgegebenen Sollladegeschwindigkeit bestimmt wird.

8. Verfahren nach einem der vorhergehenden Ansprüche, wobei
- der wenigstens eine Impulsparameter abhängig von einem Ladezustand der Akkumulatoreinheit (2) und/oder abhängig von einem Alterungszustand der Ackumulatoreinheit (2) und/oder abhängig von einer Temperatur der Akkumulatoreinheit (2) und/oder abhängig von einer Umgebungstemperatur der Akkumulatoreinheit (2) bestimmt wird; und/oder
- der wenigstens eine Impulsparameter abhängig von einem zellchemischen System der Akkumulatoreinheit (2) bestimmt wird.

9. Verfahren nach einem der vorhergehenden Ansprüche, wobei
- ein Innenwiderstand der Akkumulatoreinheit (2) im Laufe eines ersten Teils der aufeinanderfolgenden Ladeintervalle durch Variation des wenigstens einen Impulsparameters minimiert wird, um wenigstens einen optimalen Impulsparameter zu bestimmen; und
- die Ladespannung während eines zweiten Teils der aufeinanderfolgenden Ladeintervalle gemäß dem wenigstens einen optimalen Impulsparameter erzeugt wird.

10. System zum Laden einer Akkumulatoreinheit (2) während einer Vielzahl aufeinanderfolgender Ladeintervalle, das System (1) aufweisend
- eine Recheneinheit (4), die dazu eingerichtet ist, abhängig von wenigstens einer Zustandsgröße der Akkumulatoreinheit (2) und/oder abhängig von wenigstens einem Materialparameter der Akkumulatoreinheit (2) wenigstens einen Impulsparameter zu bestimmen; und
- eine Steuereinheit (3), die dazu eingerichtet ist, während der Ladeintervalle wenigstens einen Spannungsimpuls (9, 9a, 9b) einer zeitabhängigen Ladespannung abhängig von dem wenigstens einen Impulsparameter zu erzeugen und die Ladespannung der Akkumulatoreinheit (2) zur Verfügung zu stellen, um die Akkumulatoreinheit (2) zu laden, wobei während eines Ladeintervalls der Vielzahl von Ladeintervallen ein negativer Spannungsimpuls (9a) abhängig von dem wenigstens einen Impulsparameter erzeugt wird, wobei das Ladeintervall nur den negativen Spannungsimpuls (9a) enthält und sich die Ladespannung für den Rest des Ladeintervalls linear ändert.

11. System nach Anspruch 10, aufweisend
- ein Ladegerät (5) zum Verbinden der Akkumulatoreinheit (2) mit dem Ladegerät (5), wobei das Ladegerät (5) die Recheneinheit (4) beinhaltet; oder
- einen Akkumulator (7), welcher die Akkumulatoreinheit (2) und die Recheneinheit (4) beinhaltet; oder
- eine Serverrecheneinheit (8), welche die Recheneinheit (4) beinhaltet.

12. System nach Anspruch 11, aufweisend
- ein Ladegerät (5) zum Verbinden der Akkumulatoreinheit (2) mit dem Ladegerät (5), wobei das Ladegerät (5) die Steuereinheit (3) beinhaltet; oder
- einen Akkumulator (7), der die Akkumulatoreinheit (2) und die Steuereinheit (3) beinhaltet.

13. System nach einem der Ansprüche 10 bis 12, wobei
- das System (1) eine Speichereinheit (6) beinhaltet, die eine Nachschlagetabelle speichert, welche der wenigstens einen Zustandsgröße und/oder dem wenigstens einen Materialparameter den wenigstens einen Impulsparameter zuordnet; und
- die Recheneinheit (4) dazu eingerichtet ist, den wenigstens einen Impulsparameter anhand der Nachschlagetabelle zu bestimmen.

## Claims

1. A method for charging a battery unit (2) during a plurality of consecutive charging intervals, wherein
- at least one pulse parameter is determined by means of a computing unit (4) depending on at least one state variable of the battery unit (2) and/or depending on at least one material parameter of the battery unit (2); and
- at least one voltage pulse (9, 9a, 9b) of a time-dependent charging voltage is generated depending on the at least one pulse parameter during the charging intervals;
- during a charging interval of the plurality of charging intervals, a negative voltage pulse (9a) is generated depending on the at least one pulse parameter, wherein the charging interval only contains the negative voltage pulse (9a) and the charging voltage linearly changes for the rest of the charging interval.

2. The method according to claim 1, wherein
- at least one constant pulse parameter of the at least one pulse parameter is determined before the beginning of the charging intervals; and
- during each of the charging intervals, the charging voltage is generated depending on the at least one constant pulse parameter.

3. The method according to any one of the preceding claims, wherein
- at least one variable pulse parameter of the at least one pulse parameter is determined individually for each of the charging intervals depending on the at least one state variable; and
- during each of the charging intervals, the charging voltage is generated respectively depending on the at least one variable pulse parameter.

4. The method according to claim 3, wherein the at least one variable pulse parameter is determined for each of the charging intervals based on a look-up table, which associates the at least one pulse parameter with the at least one state variable and/or the at least one material parameter.

5. The method according to claim 3, wherein the at least one variable pulse parameter is determined for each of the charging intervals based on a predefined model, wherein the model correlates the at least one state variable and/or the at least one material parameter with an internal resistance of the battery unit (2).

6. The method according to any one of the preceding claims, wherein during the negative voltage pulse (9a), a charging current caused by the charging voltage is changed such that the current strength of the charging current (10, 10a, 10b) is at least approximately equal to zero and/or the current direction of the charging current (10, 10a, 10b) is reversed.

7. The method according to any one of the preceding claims, wherein the at least one pulse parameter is determined depending on a preset target charging speed.

8. The method according to any one of the preceding claims, wherein
- the at least one pulse parameter is determined depending on a state of charge of the battery unit (2) and/or depending on an aging condition of the battery unit (2) and/or depending on a temperature of the battery unit (2) and/or depending on an ambient temperature of the battery unit (2); and/or
- the at least one pulse parameter is determined depending on a cell chemistry system of the battery unit (2).

9. The method according to any one of the preceding claims, wherein
- an internal resistance of the battery unit (2) is minimized in the course of a first part of the consecutive charging intervals by variation of the at least one pulse parameter to determine at least one optimum pulse parameter; and
- the charging voltage is generated during a second part of the consecutive charging intervals according to the at least one optimum pulse parameter.

10. A system for charging a battery unit (2) during a plurality of consecutive charging intervals, the system (1) comprising
- a computing unit (4), which is configured to determine at least one pulse parameter depending on at least one state variable of the battery unit (2) and/or depending on at least one material parameter of the battery unit (2); and
- a control unit (3), which is configured to generate at least one voltage pulse (9, 9a, 9b) of a time-dependent charging voltage depending on the at least one pulse parameter during the charging intervals and to provide the charging voltage to the battery unit (2) to charge the battery unit (2), wherein a negative voltage pulse (9a) is generated depending on the at least one pulse parameter during a charging interval of the plurality of charging intervals, wherein the charging interval only includes the negative voltage pulse (9a) and the charging voltage linearly changes for the rest of the charging interval.

11. The system according to claim 10, comprising
- a charging device (5) for connecting the battery unit (2) to the charging device (5), wherein the charging device (5) includes the computing unit (4); or
- a battery (7), which includes the battery unit (2) and the computing unit (4); or
- a server computing unit (8), which includes the computing unit (4).

12. The system according to claim 11, comprising
- a charging device (5) for connecting the battery unit (2) to the charging device (5), wherein the charging device (5) includes the control unit (3); or
- a battery (7), which includes the battery unit (2) and the control unit (3).

13. The system according to any one of claims 10 to 12, wherein
- the system (1) includes a storage unit (6), which stores a look-up table,
which associates the at least one pulse parameter with the at least one state variable and/or the at least one material parameter; and
- the computing unit (4) is configured to determine the at least one pulse parameter based on the look-up table.

## Revendications

1. Procédé de chargement d'une unité d'accumulateur (2) pendant une pluralité d'intervalles de charge successifs, dans lequel
- au moins un paramètre d'impulsion est déterminé au moyen d'une unité de calcul (4) en fonction d'au moins une grandeur d'état de l'unité d'accumulateur (2) et/ou en fonction d'au moins un paramètre matériel de l'unité d'accumulateur (2) ; et
- au moins une impulsion de tension (9, 9a, 9b) d'une tension de charge dépendant du temps est générée pendant les intervalles de charge en fonction dudit au moins un paramètre d'impulsion ;
- une impulsion de tension négative (9a) est générée pendant un intervalle de charge de la pluralité d'intervalles de charge en fonction dudit au moins un paramètre d'impulsion, l'intervalle de charge ne contenant que l'impulsion de tension négative (9a) et la tension de charge variant linéairement pendant le reste de l'intervalle de charge.

2. Procédé selon la revendication 1, dans lequel
- au moins un paramètre d'impulsion constant dudit au moins un paramètre d'impulsion est déterminé avant le début des intervalles de charge ; et
- la tension de charge est générée pendant chacun des intervalles de charge en fonction dudit au moins un paramètre d'impulsion constant.

3. Procédé selon l'une quelconque des revendications précédentes, dans lequel
- au moins un paramètre d'impulsion variable dudit au moins un paramètre d'impulsion est déterminé individuellement pour chacun des intervalles de charge en fonction de ladite au moins une grandeur d'état ; et
- la tension de charge est respectivement générée pendant chacun des intervalles de charge en fonction dudit au moins un paramètre d'impulsion variable.

4. Procédé selon la revendication 3, dans lequel ledit au moins un paramètre d'impulsion variable est déterminé pour chacun des intervalles de charge à l'aide d'une table de consultation qui associe ladite au moins une grandeur d'état et/ou ledit au moins un paramètre matériel audit au moins un paramètre d'impulsion.

5. Procédé selon la revendication 3, dans lequel ledit au moins un paramètre d'impulsion variable est déterminé pour chacun des intervalles de charge à l'aide d'un modèle prédéfini, le modèle mettant en relation ladite au moins une grandeur d'état et/ou ledit au moins un paramètre matériel avec une résistance interne de l'unité d'accumulateur (2).

6. Procédé selon l'une quelconque des revendications précédentes, dans lequel un courant de charge provoqué par la tension de charge est modifié pendant l'impulsion de tension négative (9a), de telle sorte que l'intensité du courant de charge (10, 10a, 10b) soit au moins approximativement égale à zéro et/ou que la direction du courant de charge (10, 10a, 10b) soit inversée.

7. Procédé selon l'une quelconque des revendications précédentes, dans lequel ledit au moins un paramètre d'impulsion est déterminé en fonction d'une vitesse de charge nominale prédéfinie.

8. Procédé selon l'une quelconque des revendications précédentes, dans lequel
- ledit au moins un paramètre d'impulsion est déterminé en fonction d'un état de charge de l'unité d'accumulateur (2) et/ou en fonction d'un état de vieillissement de l'unité d'accumulateur (2) et/ou en fonction d'une température de l'unité d'accumulateur (2) et/ou en fonction d'une température ambiante de l'unité d'accumulateur (2) ; et/ou
- ledit au moins un paramètre d'impulsion est déterminé en fonction d'un système chimique d'élément de l'unité d'accumulateur (2).

9. Procédé selon l'une quelconque des revendications précédentes, dans lequel
- une résistance interne de l'unité d'accumulateur (2) est minimisée au cours d'une première partie des intervalles de charge successifs en faisant varier ledit au moins un paramètre d'impulsion, afin de déterminer au moins un paramètre d'impulsion optimal ; et
- la tension de charge est générée conformément audit au moins un paramètre d'impulsion optimal pendant une deuxième partie des intervalles de charge successifs.

10. Système de chargement d'une unité d'accumulateur (2) pendant une pluralité d'intervalles de charge successifs, le système (1) comprenant
- une unité de calcul (4) qui est conçue pour déterminer au moins un paramètre d'impulsion en fonction d'au moins une grandeur d'état de l'unité d'accumulateur (2) et/ou en fonction d'au moins un paramètre matériel de l'unité d'accumulateur (2) ; et
- une unité de commande (3) qui est conçue pour générer, pendant les intervalles de charge, au moins une impulsion de tension (9, 9a, 9b) d'une tension de charge dépendant du temps en fonction dudit au moins un paramètre d'impulsion et pour fournir la tension de charge à l'unité d'accumulateur (2) afin de charger l'unité d'accumulateur (2), une impulsion de tension négative (9a) étant générée en fonction dudit au moins un paramètre d'impulsion pendant un intervalle de charge de la pluralité d'intervalles de charge, l'intervalle de charge ne contenant que l'impulsion de tension négative (9a) et la tension de charge variant linéairement pendant le reste de l'intervalle de charge.

11. Système selon la revendication 10, comprenant
- un appareil de charge (5) destiné à relier l'unité d'accumulateur (2) à l'appareil de charge (5), l'appareil de charge (5) contenant l'unité de calcul (4) ; ou
- un accumulateur (7) qui contient l'unité d'accumulateur (2) et l'unité de calcul (4) ; ou
- une unité de calcul de serveur (8) qui contient l'unité de calcul (4).

12. Système selon la revendication 11, comprenant
- un appareil de charge (5) destiné à relier l'unité d'accumulateur (2) à l'appareil de charge (5), l'appareil de charge (5) contenant l'unité de commande (3) ; ou
- un accumulateur (7) qui contient l'unité d'accumulateur (2) et l'unité de commande (3).

13. Système selon l'une quelconque des revendications 10 à 12, dans lequel
- le système (1) contient une unité de stockage (6) qui stocke une table de consultation associant ladite au moins une grandeur d'état et/ou ledit au moins un paramètre matériel audit au moins un paramètre d'impulsion ; et
- l'unité de calcul (4) est configurée pour déterminer ledit au moins un paramètre d'impulsion à l'aide de la table de consultation.
